# EUROPÄISCHE PATENTANMELDUNG

(11) **EP 2 138 729 A1**
(43) Veröffentlichungstag der Anmeldung: **30.12.2009**
(21) Anmeldenummer: 09008024.3
(22) Anmeldetag: 19.06.2009
(51) Int. Cl.: F16B 31/02

(54) **Befestigungsmutter mit Drehmomentbegrenzung**

(30) Priorität: 23.06.2008 DE 102008029399
(71) Anmelder: Grohe AG, 58675 Hemer (DE)
(72) Erfinder: Faust, Günter, 58730 Fröndenberg (DE); Philipps-Liebich, Hartwig, 58675 Hemer (DE)

(57) **Zusammenfassung**

Bei einer Schraubenmutter (1) mit einem Innengewinde (11), einer umlaufend angeordneten Anzahl von Zähnen (131) und einem lösbaren Ringelement (2), das Ansatzflächen (21, 22) zur Übertragung der Kräfte zum Anziehen und Lösen der Schraubenmutter (1) und eine umlaufend angeordnete Anzahl von Zähnen (241) aufweist, die mit den Zähnen (131) an der Schraubenmutter (1) zusammenwirken, wobei die Verbindung zwischen Ringelement (2) und Schraubenmutter (1) in einer Drehrichtung drehfest und in entgegen gesetzter Drehrichtung durch ein Grenzdrehmoment beschränkt ist, ist vorgesehen, dass zwischen Ringelement (2) und Schraubenmutter (1) eine Rastverbindung angeordnet ist, mittels der das Ringelement (2) senkrecht zur Drehrichtung an der Schraubenmutter (1) festgelegt wird.

## Beschreibung

Die Erfindung betrifft eine Befestigungsmutter gemäß dem Oberbegriff des Patentanspruchs 1.

Die Verschraubung ist eine im Maschinenbau häufig genutzte Verbindung. Zum Schließen der Verbindungselemente müssen geeignete Montagewerkzeuge eingesetzt werden. Mit den genormten und in der Praxis üblichen Schraubwerkzeugen, zum Beispiel mit Maul-, Ring- und Steckschlüsseln können die meisten Verschraubungsfälle bei Herstellung und Instandhaltung von Produkten durchgeführt werden. Das bei der Verwendung handgeführter Werkzeuge zu übertragende Moment ist hierbei abhängig von der physischen Kondition des Benutzers und dessen individuellem Empfinden. Hinzu kommt, dass bei größeren Schlüsselweiten der genormte Hebelarm so bemessen wurde, dass das Übertragen des notwendigen Drehmomentes ohne Hilfsmittel nicht möglich ist. Werden die Ansprüche für eine Schraubverbindung angehoben und die Forderung gestellt, dass die Schraube mit einer definierten Kraft vorgespannt wird, macht dies ein geeignetes Werkzeug erforderlich. Das gilt nicht nur für Verschraubungen, die mit großen Vorspannkräften belastet werden sollen, sondern auch für solche, die nur mit geringen Momenten vorgespannt werden dürfen. Der konsequente Leichtbau in der Automobilindustrie sorgt ebenfalls für eine Zunahme der mit einem exakt definierten Moment vorzuspannenden Verbindungen, da der verstärkte Einsatz von neuen Konstruktionswerkstoffen wie Magnesium, Aluminium und Kunststoff dazu führt, dass die Zahl empfindlicher Schraubverbindungen stetig zunimmt. Die geringere Zugfestigkeit dieser Leichtbau-Werkstoffe im Vergleich zu Stahlwerkstoffen führt bei einer Überbeanspruchung der Schraubverbindung zu Beschädigungen des Gewindes und damit zu Schäden.

Um ein Überdehnen oder Überdrehen von Verschraubungen zu verhindern, finden verschiedene Konzepte Anwendung. Zum einen gibt es drehwinkelgesteuerte Anzugsverfahren, zum anderen drehmomentgesteuerte Verfahren. Beim drehwinkelgesteuerten Anzugsverfahren wird die Schraube mit einem definierten Drehwinkel angezogen, was über einen mechanischen oder elektronischen Messaufnehmer geschieht. Beim drehmomentgesteuerten Anzugsverfahren wird das Drehmoment beim Anziehen gemessen und beim Erreichen eines vorgegebenen Sollwertes eine Aktion ausgelöst.

Aus der US 2 685 812 A ist eine Schraubenmutter mit einem den Mutterkörper umgebenden Antriebsring bekannt, die über eine sägezahnartige Außenverzahnung am Mutterkörper und eine sägezahnartige Innenverzahnung am Antriebsring zusammenwirken. Dabei umfasst der Antriebsring für die Innenverzahnung einen elastischen Einsatz, der eine Verformung der Zähne unter Last zulässt. Nach dem Festziehen der Mutter unter dem erforderlichen Drehmoment gleitet der Antriebsring mit seinen geneigten Zähnen über die Außenzähne der Mutter hinweg. Bei weiterer Drehung des Antriebsringes gelangen dessen Zähne wieder in Antriebsverbindung mit den Zähnen der Mutter, wobei wiederum ein Drehmoment auf diese ausgeübt wird, das aber durch die Form der Zähne und deren Materialeigenschaften einen vorbestimmten Wert nicht übersteigt.
Auch aus der DE 27 39 714 C2 ist eine Schraubenmutter mit einem Antriebsring bekannt, der mit einer Kerbe versehen ist. Da durch die Kerbe eine bestimmte Grenzspannung vorgegeben ist, reißt der Antriebsring bei Erreichen eines bestimmten Drehmoments und der damit verbundenen Zugspannung an der Kerbe auf und die Schraube kann nicht weiter verdreht werden.

Der Erfindung liegt die Aufgabe zugrunde, eine Befestigungsmutter mit definierter Drehmomentbegrenzung zu verbessern.

Die Aufgabe wird durch eine Schraubenmutter mit den Merkmalen des Patentanspruchs 1 gelöst. Vorteilhafte Weiterbildungen sind Gegenstand von Unteransprüchen.

Gemäß einem Gegenstand der vorliegenden Erfindung wird eine Schraubenmutter mit einem Innengewinde, einer umlaufend angeordneten Anzahl von Zähnen und einem lösbaren Ringelement bereitgestellt, wobei das Ringelement Ansatzflächen zur Übertragung der Kräfte zum Anziehen und Lösen der Schraubenmutter und ebenfalls eine umlaufend angeordnete Anzahl von Zähnen aufweist, die mit den Zähnen an der Schraubenmutter zusammenwirken, wobei die Verbindung zwischen Ringelement und Schraubenmutter in einer Drehrichtung drehfest und in entgegen gesetzter Drehrichtung eine Begrenzung des Drehmoments vorgesehen ist. Hierbei ist zwischen Ringelement und Schraubenmutter eine Rastverbindung vorgesehen, mittels der das Ringelement senkrecht zur Drehrichtung an der Schraubenmutter festgelegt wird.
Wenn Schraubenmutter und Ringelement nicht miteinander verrastet sind, bietet die Schraubenmutter keine Ansatzfläche für ein Werkzeug und kann von Hand auf ein entsprechendes Gewinde aufgeschraubt werden. Zum Festziehen der Schraube ist es erforderlich, das Ringelement mit der Schraubenmutter zu verbinden. Dies geschieht gemäß der vorliegenden Erfindung werkzeuglos und ohne weitere Befestigungsmittel. Nach der Verrastung wirkt das Ringelement als Antriebselement auf die Schraubenmutter. Das Ringelement trägt eine sägezahnartige Innenverzahnung, die mit der entsprechenden sägezahnartigen Außenverzahnung an der Schraubenmutter in Eingriff gelangt.
Vorteilhafterweise weist die Schraubenmutter einen äußeren Ringbund mit einer Nut und das Ringelement eine entsprechende umlaufende Wölbung auf, die ineinander greifen. Dabei ist das Ringelement elastisch verformbar, so dass die Rastverbindung wieder gelöst werden kann.

Neben den Ansatzflächen für Werkzeuge weist das Ringelement eine äußere Umfangsfläche auf, die im verrasteten Zustand bündig mit der Umfangsfläche der Schraubenmutter ist. Dadurch werden die Abmessungen der Schraubenmutter durch die Einrichtung zur Drehmomentbegrenzung in Umfangsrichtung nicht vergrößert.
Weiterhin ist die Einrichtung zur Drehmomentbegrenzung - die Zähne der Schraubenmutter und des Ringelements - im verrasteten Zustand verdeckt angeordnet. Dazu sind die Zähne der Schraubenmutter an einem inneren Ringbund, der koaxial zum äußeren Ringbund angeformt ist und die Zähne des Ringelements an einem inneren Ringbund angeordnet, der koaxial zu dessen Außenwand angeformt ist.

Gemäß einer Weiterbildung der Erfindung weist das Ringelement Ansatzflächen für wenigstens zwei unterschiedliche Werkzeuge zur Übertragung der Kräfte beim Anziehen und Lösen der Schraubenmutter auf. Somit ist es möglich, bei der Werksmontage die einen Ansatzflächen zu verwenden und für Reparaturzwecke die zweiten Ansatzflächen zu verwenden, die dann noch unbenutzt und keinem Verschleiß unterworfen sind.

Vorteilhafterweise erfolgt je nach Wahl der Ansatzfläche und des zugehörigen Werkzeugs das Anziehen der Schraubenmutter mit oder ohne Drehmomentbegrenzung.

Gerade bei Kunststoffgewinden unter Dauerspannung kann es durch das Fließen des Werkstoffs zu Schäden an der Schraubverbindung kommen, so dass es gerade bei diesen Werkstoffen auf eine Drehmomentbegrenzung und somit zur Begrenzung der beim Anziehen der Schraube aufgebrachten Spannung ankommt. Vorteilhafterweise sind daher Schraubenmutter und Ringelement aus Kunststoff vorgesehen. Besonders geeignet sind thermoplastische Kunststoffe, vorzugsweise aus Polyphenylensulfid (PPS - GF40), Polyoxymethylen (POM) und /oder Acrylnitril-Butadien-Styrol (ABS). Gemäß einer vorteilhaften Weiterbildung der Erfindung ist der Dehnwert des Materials für das Ringelement größer als der für den Schraubenmutterwerkstoff vorgesehen. Somit kann sich das Ringelement beim Übergleiten der Zähne an der Schraubenmutter entsprechend der vorgegebenen Zahnhöhe ausdehnen.

Mit der Erfindung wird eine Schraubenmutter bereitgestellt, die sich zum Einbau von Ventilkartuschen in Kunststoffkörpern im Sanitärbereich eignet. Dabei kann der Werkstoff für die Schraubenmutter dieselben Materialeigenschaften wie der des Kunststoffkörpers aufweisen.
Vorzugsweise weist die Schraubenmutter einen Anschlag auf, der nach dem Festziehen der Mutter unter dem vorbestimmten Drehmoment für einen bestimmten Anpressdruck der Ventilkartusche im Kunststoffkörper sorgt.
Um die Schraubenmutter auf dem Kunststoffkörper zusätzlich gegen Verdrehen zu sichern, kann die Schraubenmutter zusätzlich zu ihrem Innengewinde umlaufend Kerben aufweisen, die mit Rasthaken am Kunststoffkörper zusammenwirken.

Ein Ausführungsbeispiel der Erfindung ist in der Zeichnung dargestellt und wird im Folgenden näher beschrieben. In den Zeichnungsunterlagen bezeichnen gleiche Bezugszeichen gleiche Funktionsteile. Es zeigt in der Zeichnung die
- Figur 1: eine Ansicht einer erfindungsgemäßen Schraubenmutter;
- Figur 2: einen Schnitt durch die Schraubenmutter aus Fig. 1;
- Figur 3: einen Schnitt durch die Schraubenmutter aus Fig. 1 und Fig. 2 entlang der Linie III-III;
- Figur 4: eine Ansicht eines erfindungsgemäßen Ringelements;
- Figur 5: einen Schnitt durch das Ringelement Fig. 4;
- Figur 6: einen Schnitt durch die Schraubenmutter aus Fig. 4 und Fig. 5 entlang der Linie VI-VI;
- Figur 7: einen Schnitt durch die Schraubenmutter mit befestigtem Ringelement;
- Figur 8: einen Schnitt durch die Schraubenmutter und Ringelement aus Fig. 7 entlang der Linie VIII-VIII;
- Figur 9: einen Schnitt durch eine Sanitärarmatur mit Schraubenmutter und Ringelement im eingebauten Zustand.

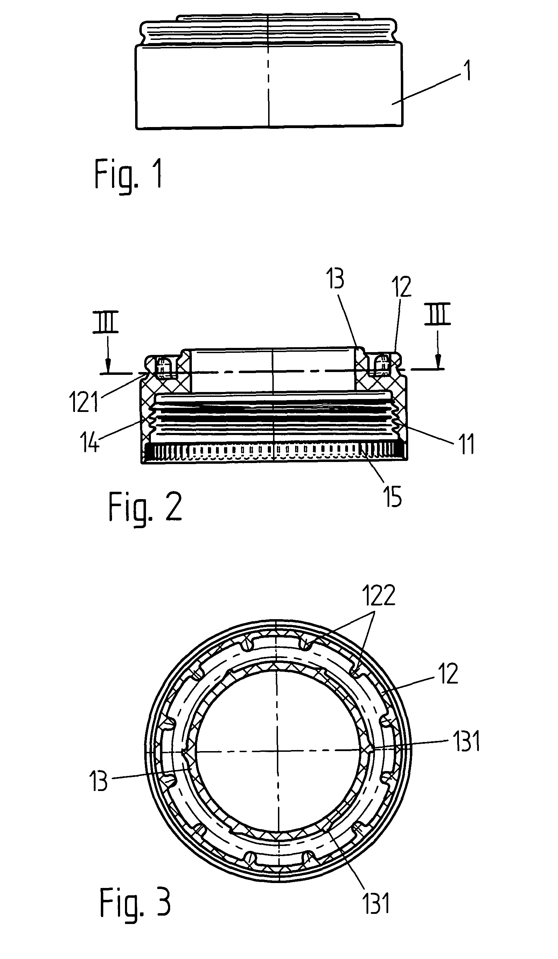

Die Figuren 1 bis 3 zeigen eine erfindungsgemäße Schraubenmutter 1. Die Schraubenmutter 1 weist eine glatte zylindrische äußere Umfangsfläche 14 auf. Am Kopfende der Mutter 1 ist ein von der Umfangsfläche 14 zurückgesetzter äußerer Ringbund 12 angeformt, an dessen Außenseite eine Nut 121 über den ganzen Umfang der Schraubenmutter 1 eingelassen ist. Weiterhin sind in regelmäßigen Abständen nach innen gerichtete abgerundete Rippen 122 vorgesehen. Zusätzlich zu einem Innengewinde 11 sind umlaufend unterhalb des Innengewindes 11 Kerbzähne 15 angeordnet, die der zusätzlichen Sicherung der Schraubenmutter 1 an einem Verbindungsteil dienen. Das Innengewinde 11 der Schraubenmutter 1 ist nicht durchgängig, sondern endet in einem Sackloch. Durch den damit entstehenden Anschlag können exakte Einbaumaße festgelegt werden. Konzentrisch zum äußeren Ringbund 12 ist ein innerer Ringbund 13 am oberen Kopfende der Schraubenmutter 1 angeformt. An diesem Ringbund 13 sind nach außen gerichtete Zähne 131, die der Form eines Sägezahns entsprechen, ausgebildet.

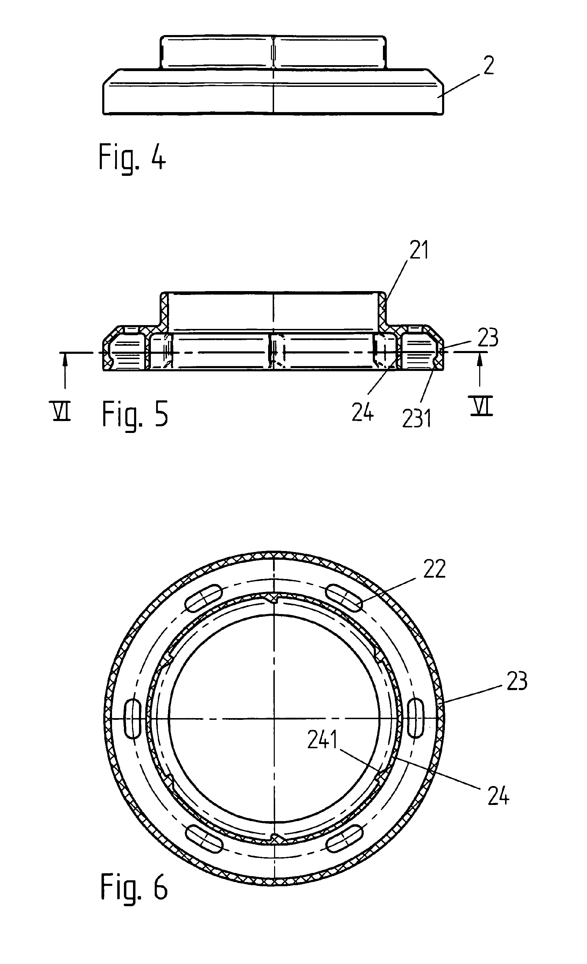

Die Figuren 4 bis 6 zeigen das zur Schraubenmutter 1 zugehörige Ringelement 2. Auch an dem Ringelement 2 sind ein äußerer Ringbund 23 und ein innerer Ringbund 24 angeformt. Der äußere Ringbund 23 endet mit einer Wölbung 231, die mit der Nut 121 der Schraubenmutter korrespondiert.

Die den Zähnen 131 der Schraubenmutter entsprechenden Zähne 241 sind am inneren Ringbund 24 des Ringelements vorgesehen.
Vorzugsweise sind die Zähne 131, 241 mit einem Keilwinkel zwischen 30° und 60°, einem Schnittwinkel von 90° und einer Höhe zwischen 0,5 und 1 mm ausgestattet. Dabei sind Zähne 131, 241 an Schraubenmutter und Ringelement jeweils mit Abständen, beispielsweise einem Winkelmaß von 30° bis 60° angeordnet.
Am oberen Kopfende des Ringelements 2 sind Ansatzflächen 21 für Werkzeuge, wie Schraubenschlüssel ausgeformt. Zusätzlich sind an der geschlossenen Stirnseite des Ringelements 2 Ausnehmungen vorgesehen, die ebenfalls als Ansatzfläche 22 für ein Spezialwerkzeug dienen. Bei der Fertigung der Schraubenmutter 1 und deren Montage in einem Bauteil kann es von Vorteil sein, werkseitig mit einem Spezialwerkzeug zu montieren. Das Spezialwerkzeug greift durch die Ausnehmungen des Ringelements 2 und wirkt direkt auf die Rippen 122 der Schraubenmutter 1, die bei Drehung des Spezialwerkzeugs transportiert wird. Über das Spezialwerkzeug kann die Schraube somit ohne Drehmomentbegrenzung verschraubt werden, da die Verzahnung zwischen Schraubenmutter 1 und Ringelement 2 nicht wirkt. Allerdings ist es auch hier möglich, über maschinelle Voreinstellungen und bekannte Verfahren das Drehmoment, das durch das Spezialwerkzeug aufgebracht wird, zu begrenzen.

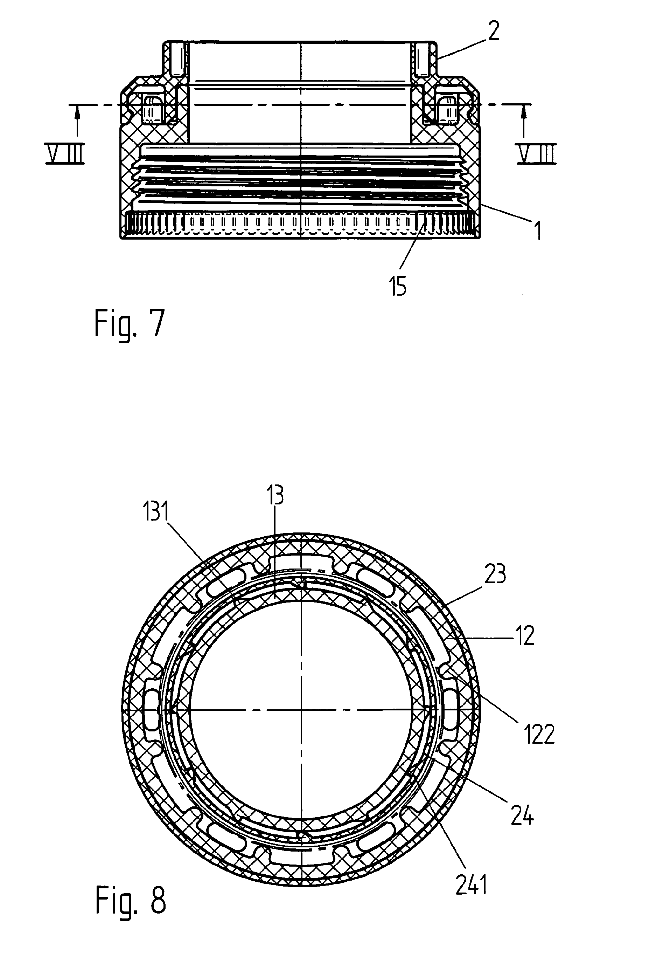

Figur 7 und 8 zeigen Schraubenmutter 1 und Ringelement 2 im verrasteten Zustand. Während die Schraubenmutter 1 aus sehr starrem Material gefertigt sein kann, muss das Material des Ringelements 2 so dehnfähig sein, dass es ausreichend verformt werden kann, um die Rastverbindung wieder zu lösen. Weiterhin muss sich der innere Ringbund 24 des Ringelements 2 mit den zugehörigen Zähnen 241 so dehnen können, dass die Zähne 131 der Schraubenmutter 1 beim Drehen überwunden werden können.
Über die Ansatzflächen 21 wird ein Drehmoment auf das Ringelement 2 ausgeübt, das dieses über seine Verzahnung 241 auf die Schraubenmutter 1 überträgt.

Aus Figur 8 wird sichtbar, dass sowohl zwischen der äußeren Verzahnung am inneren Ringbund 13 der Schraubenmutter 1 und der inneren Verzahnung am inneren Ringbund 24 des Ringelements 2 Freiräume bestehen, so dass es bei der Übertragung des Drehmoments zunächst zu einer Relativbewegung zwischen Ringelement 2 und Schraubenmutter 1 kommt ohne dass die Schraubenmutter 1 bewegt wird.
Beim Anziehen des Ringelements 2 verlagern sich schließlich die Zähne 131, 241 derart, dass die Rücken der jeweiligen Zähne 131, 241 aufeinander zu liegen kommen. Je nach Ausbildung der Zähne 131, 241 und des jeweiligen Materials verlagern sich die Zähne 131, 241 bis zu einem Punkt, an dem sich eine ausreichende Zugspannung oder Reibung entwickelt hat, danach bewegt das Ringelement 2 die Mutter 1 mit. Nach dem Festziehen der Mutter 1 mit dem Grenzdrehmoment gleitet das Ringelement 2 mit seinen geneigten Zähnen 241 über die Zähne 131 der Mutter 1 hinweg. Bei weiterer Drehung des Ringelements 1 gelangen dessen Zähne 241 wieder in Antriebsverbindung mit der Schraubenmutter 2, wobei wiederum ein Drehmoment auf diese ausgeübt wird, das aber den vorbestimmten Wert nicht übersteigt. Somit kann die Schraubverbindung nur mit dem festgelegten Grenzdrehmoment angezogen werden. Für die Festlegung des Grenzdrehmoments sind neben den Abmessungen der Zähne 131, 241 und der jeweiligen Materialstärken auch die Gleiteigenschaften der Materialien zu berücksichtigen, da auf Schmiermittel oder ähnliches verzichtet werden soll.

Bei Lösen der Schraubenmutter 1 mittels Einsatz von Schraubenschlüsseln an den Ansatzflächen 21 wird wiederum lediglich das Ringelement 2 angetrieben und bewegt die Schraubenmutter 1 mit sich, da die Zähne 131, 241 mit ihrer jeweiligen Zahnbrust aneinander zu liegen kommen und dieses Hindernis durch Dehnung des Ringelements 2 nicht überwunden werden kann. Beim Lösen der Schraubenmutter 1 über das Ringelement 2 wird diese somit direkt und drehfest mitbewegt.

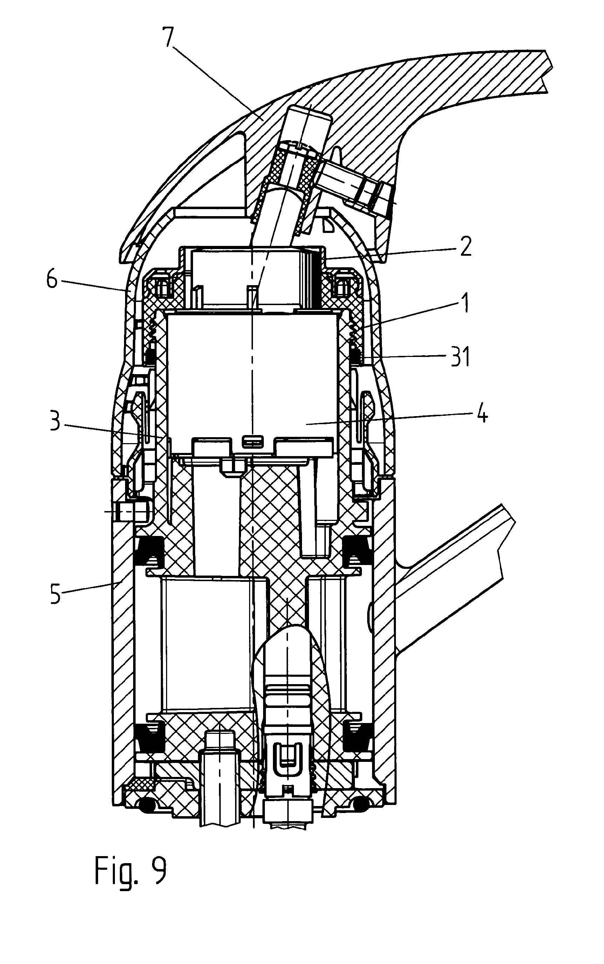

Figur 9 zeigt schließlich eine Verwendung der erfindungsgemäßen Schraubenmutter 1 und des zugehörigen Ringelements 2 in einer Sanitärarmatur.

In dem Armaturengehäuse 5 befindet sich ein Kunststoffeinsatz 3, der die Anschlüsse für die Wasserzuleitungen, die Verbindungskanäle zwischen Ventilkartusche 4 und Anschlüssen sowie den Mischwasserkanal und eine Aufnahme für die Ventilkartusche 4 enthält. Mittels der Schraubenmutter 1 wird die Ventilkartusche 4 im Kunststoffköper 3 verschraubt. Mit ihrer inneren Stirnseite, die an der oberen Schulter der Ventilkartusche 4 anliegt, legt die Schraubenmutter 1 ein bestimmtes Einbaumaß für die Ventilkartusche 4 im Kunststoffeinsatz fest, das garantiert, dass ein bestimmter Anpressdruck auf die Dichtelemente am unteren Ende der Ventilkartusche 4 gegeben ist. Durch das festgelegte Einbaumaß wird gleichzeitig auch eine Überhöhung des Anpressdrucks vermieden, der eine Schwergängigkeit der in der Kartusche angeordneten Scheibensteuerung hervorrufen könnte.

Da zu hohe Anzugsmomente der Schraubenmutter 1 zur Zerstörung des Kunststoffgewindes führen könnten oder es aufgrund der Spannungen über die Lebenszeit zu ungewollten Fließverformungen kommen kann, ist der Einbau der Schraubenmutter 1 unter Berücksichtigung eines Grenzdrehmoments notwendig.
Zur anschließenden Sicherung der Schraubenmutter 1 nach dem Einbau sind am Kunststoffkörper 3 Rasthaken 31 vorgesehen, die mit den Kerben 15 an der Schraubenmutter 1 zusammenwirken und ungewolltes Lösen der Schraubenmutter verhindern. Dadurch dass die Ansatzflächen 21, 22 für das Aufbringen der Kräfte zum Anziehen und Lösen der Schraubenmuter 1 über das Ringelement 2 an das Kopfende der Schraubenmutter 1 verlagert werden konnten, ist der Platzbedarf in Umfangsrichtung sehr gering. Für Kunststoffschraubverbindungen ist es auf diesem Wege möglich Grenzdrehmomente in definierten Bereichen festzulegen.

### Bezugszeichenliste

- 1: Schraubenmutter
- 12: äußerer Ringbund
- 121: Nut
- 122: Rippe
- 13: innerer Ringbund
- 131: Zahn
- 14: Umfangsfläche
- 15: Kerbzahn
- 2: Ringelement
- 21: Ansatzfläche
- 22: Ansatzfläche
- 23: äußerer Ringbund
- 231: Wölbung
- 24: innerer Ringbund
- 241: Zahn
- 3: Kunststoffkörper
- 31: Rasthaken
- 4: Ventilkartusche
- 5: Armaturenkörper
- 6: Haube
- 7: Bedienhebel

## Patentansprüche

1. Schraubenmutter (1) mit
- einem Innengewinde (11),
- einer umlaufend angeordneten Anzahl von Zähnen (131) und
- einem lösbaren Ringelement (2),
- - das Ansatzflächen (21, 22) zur Übertragung der Kräfte zum Anziehen und Lösen der Schraubenmutter (1) und
- - eine umlaufend angeordnete Anzahl von Zähnen (241) aufweist, die mit den Zähnen (131) an der Schraubenmutter (1) zusammenwirken, wobei die Verbindung zwischen Ringelement (2) und Schraubenmutter (1) in einer Drehrichtung drehfest und in entgegen gesetzter Drehrichtung eine Begrenzung des Drehmoments vorgesehen ist,
**dadurch gekennzeichnet, dass**
zwischen Ringelement (2) und Schraubenmutter (1) eine Rastverbindung vorgesehen ist, mittels der das Ringelement (2) senkrecht zur Drehrichtung an der Schraubenmutter (1) festgelegt wird.

2. Schraubenmutter (1) nach Anspruch 1, **dadurch gekennzeichnet, dass** die Schraubenmutter (1) einen äußeren Ringbund (12) mit einer Nut (121) aufweist und das Ringelement (2) mit einer entsprechenden umlaufenden Wölbung (231) versehen ist.

3. Schraubenmutter (1) nach Anspruch 1 oder 2, **dadurch gekennzeichnet, dass** die äußere Umfangsfläche des Ringelements (2) bündig mit der Umfangsfläche (14) der Schraubenmutter (1) ist.

4. Schraubenmutter (1) nach einem der vorhergehenden Ansprüche, **dadurch gekennzeichnet, dass** die Zähne (131, 241) der Schraubenmutter (1) und des Ringelements (2) im verrasteten Zustand verdeckt sind.

5. Schraubenmutter (1) nach einem der vorhergehenden Ansprüche, **dadurch gekennzeichnet, dass** die Zähne (131) der Schraubenmutter (1) an einem inneren Ringbund (13) angeordnet sind, der koaxial zum äußeren Ringbund (12) angeformt ist.

6. Schraubenmutter (1) nach einem der vorhergehenden Ansprüche, **dadurch gekennzeichnet, dass** die Zähne (241) des Ringelements (2) an einem inneren Ringbund (24) angeordnet sind, der koaxial zur Außenwand angeformt ist.

7. Schraubenmutter (1) nach einem der vorhergehenden Ansprüche, **dadurch gekennzeichnet, dass** das Ringelement (2) Ansatzflächen (21, 22) für wenigstens zwei unterschiedliche Werkzeuge zur Übertragung der Kräfte beim Anziehen und Lösen der Schraubenmutter (1) aufweist.

8. Schraubenmutter (1) nach Anspruch 7, **dadurch gekennzeichnet, dass** je nach Wahl der Ansatzfläche (21, 22) und zugehörigen Werkzeugs das Anziehen der Schraubenmutter (1) mit oder ohne Drehmomentbegrenzung erfolgt.

9. Schraubenmutter (1) nach einem der vorhergehenden Ansprüche, **dadurch gekennzeichnet, dass** Schraubenmutter (1) und Ringelement (2) aus Kunststoff, vorzugsweise thermoplastischem Kunststoff, vorgesehen sind.

10. Schraubenmutter (1) nach einem der vorhergehenden Ansprüche, **dadurch gekennzeichnet, dass** Schraubenmutter (1) und Ringelement (2) aus Kunststoff vorgesehen sind, ausgewählt aus der Gruppe bestehend aus Polyphenylensulfid (PPS), GF40, Polyoxymethylen (POM), ABS.

11. Schraubenmutter (1) nach einem der vorhergehenden Ansprüche, **dadurch gekennzeichnet, dass** der Dehnwert des Materials für das Ringelement (2) größer als der für den Schraubenmutterwerkstoff vorgesehen ist.

12. Verwendung einer Schraubenmutter (1) nach einem der vorhergehenden Ansprüche zum Einbau von Ventilkartuschen (4) in Kunststoffkörpern (3) im Sanitärbereich, wobei der Werkstoff für den Kunststoffkörper (3) dem Schraubenmutterwerkstoff entspricht.

13. Verwendung einer Schraubenmutter (1) nach einem der vorhergehenden Ansprüche zum Einbau von Ventilkartuschen (4) in Kunststoffkörpern (3) im Sanitärbereich, wobei die Schraubenmutter (1) einen Anschlag aufweist, der nach dem Festziehen der Schraubenmutter (1) unter dem vorbestimmten Drehmoment die Ventilkartusche (4) unter bestimmten Anpressdruck im Kunststoffkörper (3) festlegt.

14. Verwendung einer Schraubenmutter (1) nach einem der vorhergehenden Ansprüche zum Einbau von Ventilkartuschen (4) in Kunststoffkörpern (3) im Sanitärbereich, wobei die Schraubenmutter (1) zusätzlich zu ihrem Innengewinde (11) umlaufend Kerben (15) aufweist, die mit Rastnocken (31) am Kunststoffkörper (3) zusammenwirken.
